# FASCICULE DE BREVET EUROPEEN

(11) **EP 1 424 227 B1**
(45) Date de publication et mention de la délivrance du brevet: **19.03.2008**
(21) Numéro de dépôt: 03292733.7
(22) Date de dépôt: 31.10.2003
(51) Int. Cl.: B60G 17/015, B60G 15/06, G01L 1/06

(54) **Butée de suspension instrumentée en déformation pour mésurer les efforts**
Axialwälzlager für eine Fahrzeugaufhängung mit einer Verformungsmessvorrichtung
Suspension axial rolling bearing with a strain measuring device

(30) Priorité: 27.11.2002 FR 0214897
(43) Date de publication de la demande: 02.06.2004
(73) Titulaire: SNR ROULEMENTS, F-74010 Annecy Cedex (FR)
(72) Inventeur: Blanchin, Olivier, 74000 Annecy (FR); Nicot, Christophe, 74600 Quintal (FR)
(74) Mandataire: Geismar, Thierry

(56) Documents cités:
- EP-A- 0 296 960
- US-A- 4 830 399
- US-A- 5 060 525

## Description

Les butées connues comprennent classiquement un organe fixe destiné à être solidaire du châssis du véhicule et un organe tournant destiné à être solidaire en rotation du ressort de suspension.

En particulier, les butées peuvent comprendre un roulement pourvu d'une bague supérieure fixe, d'une bague inférieure tournante et de corps roulants disposés entre lesdites bagues.

Ainsi, les butées permettent d'assurer la solidarisation des roues au châssis du véhicule par l'intermédiaire des suspensions et des ressorts associés, et ce en laissant les roues libres de se déplacer angulairement et en supportant les efforts multiaxiaux dus aux conditions de roulage (accélération, freinage, état du revêtement, virage, ...).

En particulier, les efforts verticaux subis par la roue vont remonter au châssis du véhicule en passant en partie par la butée de suspension, ce qui provoque une déformation des organes de ladite butée.

Par ailleurs, il est souhaitable de mesurer les efforts subis par les roues du véhicule, notamment pour les besoins d'un certain nombre de systèmes d'assistance électronique du véhicule, par exemple destinés à la sécurité active, au confort de conduite (notamment au pilotage des suspensions) ou à la réduction de la consommation de carburant.

Pour ce faire, il est connu de mesurer directement les forces exercées par la chaussée sur le véhicule, ces mesures étant réalisées soit au niveau du pneu soit au niveau des pièces du train de roue. Mais ces stratégies de mesures présentent un certain nombre de limitations.

En particulier, lorsque la mesure est réalisée sur le pneu qui est un élément tournant, il se pose des problèmes de transmission du signal dans un référentiel fixe de sorte à pouvoir en déduire le module des forces, et ce de façon d'autant plus critique que les signaux sont nombreux et doivent être analysés en temps réel pour pouvoir commander les systèmes d'assistance.

Concernant la mesure sur les pièces de train, le principal problème qui se pose est celui de l'analyse des signaux pour en déduire le module des forces respectivement dans les trois directions de l'espace. En effet, l'application d'un effort transversal au pied de la roue crée un moment de renversement au niveau du roulement qui est dû au bras de levier que représente le rayon de la roue. L'effet de l'effort transversal va donc être prépondérant sur l'effet de l'effort vertical ce qui rend difficile la détermination exacte de cet effort vertical.

Le document US 4 830 399 décrit une butée munie d'un capteur de pression pour mesurer les efforts.

Pour résoudre ces inconvénients, l'invention propose de mesurer, au niveau de la butée de suspension du véhicule, les efforts, notamment verticaux, appliqués à la roue dudit véhicule, et ce de façon indirecte en mesurant en continu les déformations d'un organe fixe de la butée qui sont induites par lesdits efforts.

A cet effet, l'invention propose une butée de suspension pour roue de véhicule automobile, comprenant un dispositif de mesure des efforts appliqués à la roue du véhicule, ledit dispositif comprenant au moins un capteur de déformation qui est associé à un organe fixe de ladite butée de sorte à mesurer les déformations dudit organe qui sont induites par lesdits efforts appliqués, et un moyen de calcul apte, à partir de ces déformations, à calculer les efforts appliqués correspondants.

Selon une réalisation le dispositif est agencé pour mesurer les efforts verticaux appliqués à la roue du véhicule.

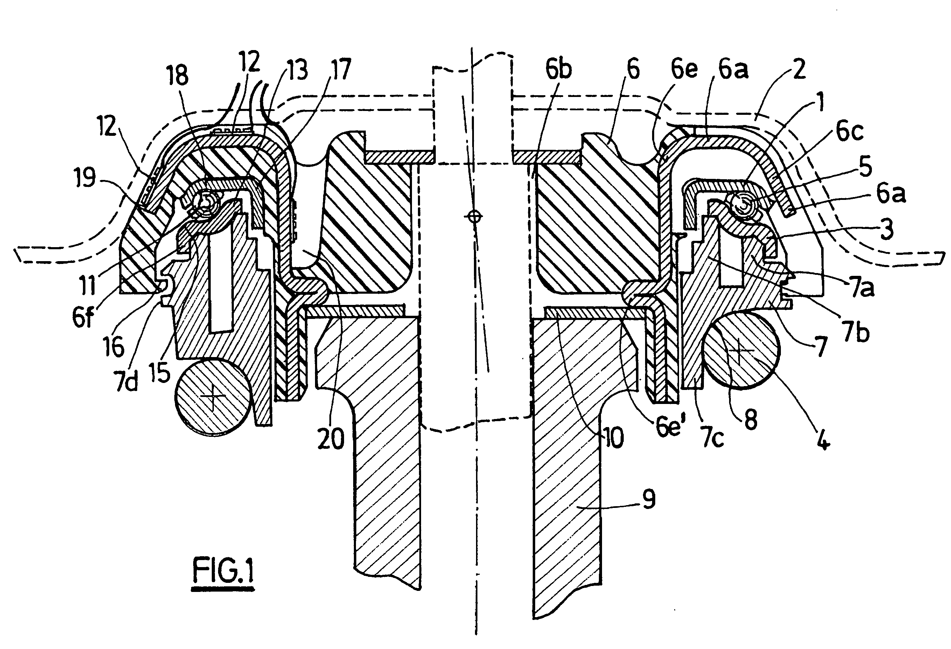

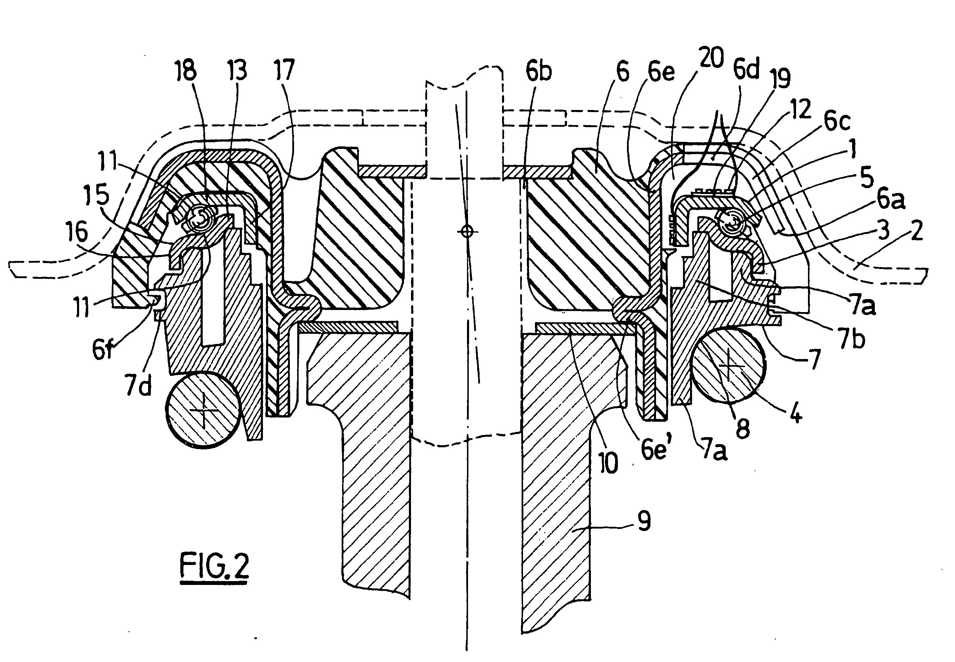

D'autres objets et avantages de l'invention apparaîtront au cours de la description qui suit, faite en référence aux dessins annexés, dans lesquels les figures 1 et 2 sont des vues partielles en coupe longitudinale d'une butée dans laquelle les capteurs de déformation sont associés respectivement à la coupelle supérieure et à la bague supérieure.

En relation avec les figures, on décrit une butée de suspension pour roue de véhicule automobile qui comprend un roulement pourvu d'une bague supérieure 1 fixe qui est solidaire du châssis 2 du véhicule, d'une bague inférieure tournante 3 qui est solidaire en rotation du ressort 4 de suspension et de corps roulants 5 disposés entre lesdites bagues de sorte à permettre la rotation relative desdites bagues autour d'un axe.

Dans la suite de la description les termes « supérieur » et « inférieur » sont définis par rapport à des localisations respectivement supérieure et inférieure dans les butées de suspension telles que représentées sur les figures, les termes « intérieur » et « extérieur » sont définis par rapport à des localisations respectivement proche et éloignée de l'axe de rotation, les termes « vertical » ou « axial » et « transversal » ou « radial » sont définis par rapport à un plan respectivement parallèle et perpendiculaire à l'axe de rotation.

Dans les modes de réalisation représentés, la butée de suspension comprend une coupelle supérieure 6 associée à la bague supérieure 1, ladite coupelle étant associée au châssis 2, et une coupelle inférieure 7 associée à la bague inférieure 3.

La coupelle inférieure 7 est formée d'une pièce essentiellement annulaire qui comprend un logement 8 dans lequel l'extrémité du ressort 4 vient en appui en assurant une fixation relative en rotation du ressort 4 sur la coupelle inférieure 7. La coupelle inférieure 7 est par exemple obtenue par moulage d'un matériau thermoplastique de type polyamide 6.6.

La coupelle supérieure 6 est formée d'une pièce essentiellement annulaire qui dans les modes de réalisation représentés est formée en caoutchouc surmoulé sur un insert de renfort annulaire 6a, ladite coupelle comprenant un alésage 6b agencé pour recevoir l'extrémité de la tige de l'amortisseur de suspension.

L'insert 6a comprend, de l'extérieur vers l'intérieur et reliées entre elles, une couronne sensiblement axiale 6c, une partie annulaire radiale 6d et une jupe cylindrique 6e s'étendant axialement vers le bas à partir du bord extérieur de la partie radiale 6d. La jupe axiale 6e comprend un repli radial annulaire 6e' pour l'appui d'une butée de choc 9 par l'intermédiaire d'un insert 10 monté sur ladite butée de choc.

La butée de choc 9 comprend une partie annulaire axiale et une jupe cylindrique s'étendant axialement vers le bas à partir du bord extérieur de la partie radiale.

Les bagues 1, 3 du roulement sont constituées chacune d'une rondelle de tôle emboutie qui sont respectivement associées, par exemple par emmanchement, aux deux coupelles 6, 7, lesdites bagues comprenant des chemins de roulement 11 disposés en vis-à-vis de sorte à recevoir les corps roulants 5 qui, dans les modes de réalisation représentés, sont sphériques. En particulier, les géométries des coupelles 6, 7 et des bagues 1, 3 associées sont agencées pour permettre une fixation fiable des bagues 1, 3 sur les coupelles 6, 7, et ce notamment vis-à-vis des efforts radiaux.

Bien que la description de l'invention soit faite en relation avec une butée de suspension de type « troisième génération » dans laquelle le bloc filtrant est intégré à la coupelle supérieure 6, l'invention est directement transposable par l'homme du métier à des butées de suspension présentant une autre structure générale, c'est-à-dire dans lesquelles les différents organes fonctionnels de la butée sont agencés différemment. En outre, la description faite est également directement transposable à une butée de suspension du type sans roulement, par exemple du type à palier lisse ou comprenant une pièce élastomérique déformable en torsion, ladite butée comprenant toujours un organe fixe. En effet, l'invention concerne l'intégration dans la butée de suspension d'un dispositif de mesure des efforts, notamment verticaux ou axiaux, appliqués à la roue du véhicule.

Le dispositif de mesure comprend au moins un capteur de déformation 12 qui est associé à un organe fixe 1, 6 de ladite butée de sorte à mesurer les déformations dudit organe qui sont induites par les efforts appliqués sur la roue, et un moyen de calcul apte, à partir de ces déformations, à calculer les efforts appliqués correspondants.

En particulier, le ou les capteurs de déformation 12 peuvent être choisis parmi les capteurs comprenant des jauges de contraintes à base d'éléments piézorésistifs, les capteurs d'ondes acoustiques de surface, les capteurs de champ magnétique par exemple basés sur des éléments sensibles de type magnétorésistance, magnétorésistance géante, effet Hall ou magnétorésistance à effet tunnel.

Suivant l'invention, il est donc possible de mesurer les efforts, notamment verticaux, appliqués sur une roue associée au châssis 2 d'un véhicule automobile par l'intermédiaire de la butée.

En effet, les efforts appliqués sur une roue par le châssis 2 ou réciproquement, notamment dus aux conditions de roulage, se traduisent par des déformations des organes fixes 1, 6 de la butée.

Et, il est possible de déterminer une loi de comportement en déformation d'un organe fixe 1, 6 en fonction des efforts appliqués, par exemple issue de la théorie ou d'un étalonnage initial, et d'utiliser cette loi dans le moyen de calcul pour relier les déformations mesurées aux efforts, notamment verticaux, qui sont subis.

Sur les figures 1 et 2, la bague inférieure 3 comprend, de l'intérieur vers l'extérieur et reliés entre eux, une couronne radiale 13, le chemin de roulement 11 et une couronne comprenant une partie radiale 15 et une partie axiale 16. La couronne intérieure 13 est décalée axialement vers le haut par rapport à la partie radiale 15. La coupelle inférieure 7 comprend du coté supérieur deux saillies cylindriques 7a, 7b destinées à se loger respectivement contre une couronne 13, 15 de sorte à assurer une solidarisation fiable de la bague inférieure 3 sur la coupelle 7. Par ailleurs, la coupelle inférieure 7 comprend, du coté inférieur, une saillie cylindrique 7c qui forme la paroi axiale du logement 8, la paroi radiale dudit logement étant formée par la face inférieure du corps de la coupelle inférieure 7.

La bague supérieure 1 comprend, de l'intérieur vers l'extérieur et reliés entre eux, une couronne axiale 17, une couronne radiale 18 et le chemin de roulement 11.

Sur la figure 1, les capteurs de déformation 12 sont associés à la coupelle supérieure 6 qui est réalisée en un matériau qui est agencé pour se déformer élastiquement sous l'effet des efforts subis, par exemple en acier.

Les capteurs 12, au nombre de trois, comprennent un substrat diélectrique formant une plaquette 19 sur laquelle des jauges ou des éléments sensibles sont collés ou formés par sérigraphie ou procédé équivalent. Pour mesurer les déformations de la partie de la coupelle 6 sur laquelle la plaquette 19 est associée, la plaquette 19 est fixée rigidement à la coupelle 6, par exemple par collage ou par soudage. En outre, la répartition des jauges ou des éléments sensibles sur la plaquette 19 peut être agencée de sorte à mesurer les déformations en extension et en torsion.

Dans le mode de réalisation représenté sur la figure 1, la mesure des déformations est réalisée dans trois plans différents de sorte à améliorer la précision de la mesure des efforts. A cet effet, chaque plaquette 19 est associée, dans un logement 20 prévu dans la coupelle 6, respectivement sur la face extérieure de la couronne sensiblement axiale 6c, sur la face supérieure de la partie radiale 6d et sur la face extérieure de la jupe 6e. En outre, les plaquettes 19 sont disposées au voisinage du roulement.

Dans ce mode de réalisation, les efforts sont transmis à l'insert 6 notamment par le contact entre le repli radial 6e' et la butée de choc 9, ce qui forme des zones de déformations préférentielles sur l'insert 6, sur lesquelles il est donc avantageux d'effectuer les mesures.

Sur la figure 2, les capteurs de déformation 12 sont associés à la bague supérieure 1 qui est réalisée en un matériau agencé pour se déformer élastiquement sous l'effet des efforts subis, par exemple en acier.

Les capteurs 12, au nombre de deux, sont de structure analogue à celle décrite en relation avec la figure 1 et les plaquettes 19 sont fixées rigidement à la bague 1, par exemple par collage ou par soudage.

Dans le mode de réalisation représenté sur la figure 2, la mesure des déformations est réalisée dans deux plans différents de sorte à améliorer la précision de la mesure des efforts. A cet effet, chaque plaquette 19 est associée, dans un logement 20 prévu dans la coupelle 6, respectivement sur la face extérieure de la couronne axiale 17 et sur la face supérieure de la couronne radiale 18.

Dans ce mode de réalisation, les contraintes exercées sur le roulement ainsi que la rotation de la bague inférieure 3 induite par les efforts, notamment verticaux, forment des zones de déformations préférentielles sur la bague supérieure 1, sur lesquelles il est donc avantageux d'effectuer les mesures.

Selon une réalisation représentée sur les figures, les extrémités 7d, 6f des coupelles inférieure 7 et supérieure 6 ont une géométrie agencée pour coopérer de sorte à former moyen d'étanchéité statique pour le dispositif de mesure. En effet, la pollution extérieure est ainsi empêchée de pénétrer à l'intérieur de la butée, ce qui permet notamment de protéger le capteur 12 des éventuels contaminants.

## Revendications

1. Butée de suspension pour roue de véhicule automobile, comprenant un dispositif de mesure des efforts appliqués à la roue du véhicule, **caractérisé en ce que** ledit dispositif comprend au moins un capteur de déformation (12) qui est associé à un organe fixe (1, 6) de ladite butée de sorte à mesurer les déformations dudit organe qui sont induites par lesdits efforts appliqués, et un moyen de calcul apte, à partir de ces déformations, à calculer les efforts appliqués correspondants.

2. Butée selon la revendication 1, **caractérisé en ce que** le dispositif est agencé pour mesurer les efforts verticaux appliqués à la roue du véhicule.

3. Butée selon la revendication 1 ou 2, **caractérisée en ce qu'**elle comprend un roulement pourvu d'une bague supérieure fixe (1) destinée à être solidaire du châssis (2) du véhicule, d'une bague inférieure tournante (3) destinée à être solidaire du ressort (4) de suspension, et de corps roulants (5) disposés entre lesdites bagues.

4. Butée selon la revendication 3, **caractérisée en ce qu'**elle comprend une coupelle supérieure (6) associée à la bague supérieure (1) et destinée à être associée au châssis (2), et une coupelle inférieure (7) associée à la bague inférieure (3).

5. Butée selon la revendication 4, **caractérisée en ce que** le ou les capteurs de déformation (12) sont associés à la coupelle supérieure (6).

6. Butée selon la revendication 3 ou 4, **caractérisée en ce que** le ou les capteurs de déformation (12) sont associés à la bague supérieure (1).

7. Butée selon l'une quelconque des revendications 4 à 6, **caractérisée en ce que** les coupelles inférieures (7) et supérieures (6) comprennent des extensions (7d, 6f) qui coopèrent de sorte à former moyen d'étanchéité statique.

8. Butée selon l'une quelconque des revendications 1 à 7, **caractérisée en ce que** le ou les capteurs (12) de déformation sont choisis parmi les capteurs comprenant des jauges de contraintes à base d'éléments piézorésistifs, les capteurs d'ondes acoustiques de surface, les capteurs de champ magnétique.

## Claims

1. A bump stop for the wheel of a motor car, comprising a device for measuring the stresses applied to the wheel of the vehicle, **characterized in that** said device comprises at least a distortion sensor (12), which is associated with a fixed member (1, 6) of said stop, so as to measure the distortions of said member which are induced by said applied stresses, and calculation means capable of calculating, from such distortions, the corresponding applied stresses.

2. A stop according to claim 1, **characterized in that** the device is arranged so as to measure the vertical stresses applied to the wheel of the vehicle.

3. A stop according to claims 1 or 2, **characterized in that** it includes a bearing provided with a fixed upper ring (1) intended to be integral with the frame (2) of the vehicle, a rotating lower ring (3) intended to be integral with the bumping spring (4), and with rolling elements (5) positioned between said rings.

4. A stop according to claim 3, **characterized in that** it includes an upper cup (6) associated with the upper ring (1), and intended to be associated with the frame (2), and a lower cup (7) associated with the lower ring (3).

5. A stop according to claim 4, **characterized in that** the distortion sensor(s) (12) is/are associated with the upper cup (6).

6. A stop according to claims 3 or 4, **characterized in that** the distortion sensor(s) (12) are associated with the upper ring (1).

7. A stop according to any one of claims 4 to 6, **characterized in that** the lower (7) and upper (6) cups comprise extensions (7d, 6f) which cooperate to form static sealing means.

8. A stop according to any one of claims 1 to 7, **characterized in that** the distortion sensor(s) (12) is/are selected among the sensors comprising strain gauges based on piezoresistive elements, surface acoustic wave sensors, magnetic field sensors.

## Patentansprüche

1. Aufhängungsanschlag für ein Kraftfahrzeugrad mit einer Messvorrichtung der auf das Rad des Fahrzeugs angewendeten Kräfte, **dadurch gekennzeichnet, dass** die genannte Vorrichtung wenigstens einen Verformungssensor (12) umfasst, der einem festen Organ (1, 6) des genannten Anschlags derart zugeordnet ist, dass die Verformungen des genannten Elements gemessen werden, die durch die angewendeten Kräfte induziert werden, und ein Berechnungsmittel, das geeignet ist, ausgehend von diesen Verformungen die entsprechenden angewendeten Kräfte zu berechnen.

2. Anschlag gemäß Anspruch 1, **dadurch gekennzeichnet, dass** die Vorrichtung angeordnet ist, um die auf das Rad des Fahrzeugs angewendeten vertikalen Kräfte zu messen.

3. Anschlag gemäß Anspruch 1 oder 2, **dadurch gekennzeichnet, dass** sie ein Lager umfasst, das mit einem oberen festen Ring (1) versehen ist, der dazu bestimmt ist, fest mit der Karosserie (2) des Fahrzeugs verbunden zu werden, mit einem unteren Drehring (3), der dazu bestimmt ist, fest mit der Aufhängungsfeder (4) verbunden zu werden, und mit zwischen den genannten Ringen angeordneten Rollkörpern (5).

4. Anschlag gemäß Anspruch 3, **dadurch gekennzeichnet, dass** er eine obere Schale (6) umfasst, die dem oberen Ring (1) zugeordnet ist und dazu bestimmt ist, dem Rahmen (2) zugeordnet zu werden, und eine untere Schale (7), die dem unteren Ring (3) zugeordnet ist.

5. Anschlag gemäß Anspruch 4, **dadurch gekennzeichnet, dass** der oder die Verformungssensor(en) (12) der oberen Schale (6) zugeordnet sind.

6. Anschlag gemäß Anspruch 3 oder 4, **dadurch gekennzeichnet, dass** die obere (n) Schale (n) (12) dem oberen Ring (1) zugeordnet ist / sind.

7. Anschlag gemäß Anspruch 4 bis 6, **dadurch gekennzeichnet, dass** die unteren (7) und oberen (6) Schalen Erweiterungen (7d, 6f) umfassen, die derart zusammenwirken, dass sie ein statisches Abdichtmittel bilden.

8. Anschlag gemäß Anspruch 1 bis 7, **dadurch gekennzeichnet, dass** der oder die Verformungssensor(en) (12) aus den Sensoren ausgewählt ist / sind, die Beanspruchungseichmaße basierend auf piezoresistiven Elementen, die Sensoren für akustische Oberflächenwellen und die Magnetfeldsensoren umfassen.
